(19) Europäisches Patentamt
European Patent Office
Office européen des brevets

(11) **EP 1 892 433 A2**

(12) **EUROPEAN PATENT APPLICATION**

(43) Date of publication:
**27.02.2008 Bulletin 2008/09**

(51) Int Cl.:
*F16D 55/22* *(2006.01)*

(21) Application number: **07114544.5**

(22) Date of filing: **17.08.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **23.08.2006 US 508163**

(71) Applicant: **Bendix Spicer Foundation Brake LLC
Elyria, OH 44035 (US)**

(72) Inventors:
• **Scheckelhoff, Kenneth, E.
Elyria, OH 44035 (US)**
• **Plantan, Ronald S.
Elyria, OH 44035 (US)**

(74) Representative: **Dantz, Jan Henning et al
Loesenbeck - Stracke - Specht - Dantz
Am Zwinger 2
33602 Bielefeld (DE)**

(54) **Disc brake actuator mounting arrangement**

(57)     A disc brake for a vehicle such as a commercial vehicle, wherein the brake caliper (1) is provided with an actuator mounting flange surface which is parallel to the brake rotor, and a corresponding pneumatic or electric actuator (2) is provided with a mounting flange surface which is angled, such that when mounted to the caliper, the actuator is offset at a desired angle relative to the caliper and the vehicle axle on which the caliper is located. This approach to brake design reduces brake caliper production and tooling costs by eliminating multi-stage machining operations, and lowers distribution and inventory costs by permitting standardization on a single "zero degree" caliper design, thereby offsetting additional costs associated with producing and distributing brake actuators with differing mounting flange surface angles.

Fig. 2

**Description**

**BACKGROUND AND SUMMARY OF THE INVENTION**

The present invention relates to disc brakes for vehicles and, in particular, to an approach to mounting an actuator for air-operated disc brakes for commercial vehicles.

Pneumatically-operated disc brakes have been undergoing development and deployment on commercial vehicles since at least the 1970's, and are beginning to replace drum-style brakes due to advantages in areas such as cooling, fade resistance and serviceability. German patent publication DE 40 32 886 A1, and in particular Fig. 1 of this document, discloses an example of such an air disc brake. In this design, a pneumatic diaphragm chamber (pneumatic actuator) 12 is attached to a rear face of the disc brake caliper housing 3, and applies a brake actuation force through a linear actuator rod 10 to a brake actuator lever 9 within the caliper. The brake's actuator lever in turn transfers and multiplies the force applied by the actuator rod to one or more spindles 14, which force brake pads 20 against a brake disc or rotor 1. The terms "brake disc," "rotor" and "brake rotor" are used interchangeably herein.

As shown in Fig. 1 of DE 40 32 886 A1, the actuator 12 is located inboard of the brake caliper, in large part because commercial vehicle wheel rims are sized to only provide adequate clearance for the drum-type brakes historically employed on such vehicles. Because the resulting space envelope between the wheel and its axle is limited, the actuator 12 must be located into the space adjacent to the wheel. However, because the actuator must be positioned in space close to other vehicle equipment (*e.g.*, front axle steering knuckle, front and rear bearing flanges, tie rods and tie rod ends, suspension components), it must configured to be attached to the caliper in a manner which permits it to fit within the available space in the particular vehicle application. Accordingly, in order to provide disk brakes which fit differing space envelopes on different vehicles, multiple combinations of matching brake calipers and pneumatic actuators have been provided with mounting flanges which complement one another in order to achieve the desired final positioning of the actuator when mounted on a particular axle application.

Where different applications require the pneumatic actuator to be positioned on the brake caliper in a different manner, multiple brake caliper and/or actuator designs have been produced and necessary inventories of multiple brake calipers suitable for use with corresponding actuators have been maintained. The resulting distribution and inventory requirements are costly, and the need for multiple caliper designs also has significantly increased manufacturing costs. An example of the latter is the case where a caliper and actuator design is needed in differing actuator mounting orientations, such as 0°, 5° and 12° offsets. Providing different orientations requires additional capital investment for casting and machining tooling (*e.g.*, different caliper holding fixtures), and additional machining operations (for example, , *e.g.*, a caliper adapted to place the actuator at a 12° angle relative to the vehicle axle requires first setting up fixtures to machine in various surfaces of the caliper at a zero degree orientation, and then reorienting the in-process caliper in the same or a different fixture for additional machining to achieve the features required to provide the desired 12° actuator offset. Further, the existence of multiple actuator designs complicates service in the field, for example, by requiring technicians to ensure they obtain application-specific actuators when replacement is necessary.

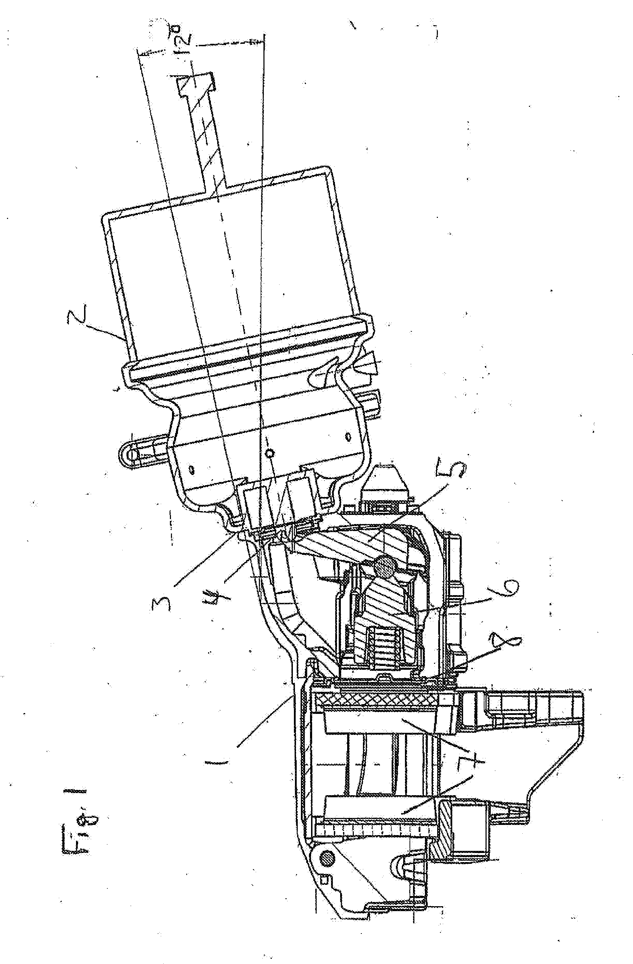

An example of such a prior art arrangement is shown in Fig. 1. This illustration shows a prior art arrangement with a brake caliper 1 mated to a pneumatic actuator 2 at a mounting flange joint 3, in which the brake actuator is located at a 12° angle relative to the vehicle axle axis. The caliper 1 and actuator 2 are illustrated in partial cross-sectional view, showing the general arrangement of the tip of the actuator pushrod 4 against brake actuator lever 5, which in turn causes a brake application mechanism 6 to press brake pads 7 against a brake disk mounted on the vehicle axle (disk and axle not illustrated). In order to machine, for example, an application mechanism receiving port cover surface 8 of this prior art caliper, the caliper first is located in a fixture at an angle (0° relative to a machining tool) which mills the cover surface, and then the partially-machined caliper must be reoriented to permit the machining of the mounting flange joint 3 at the desired 12° angle.

It is an object of the present invention to overcome the foregoing problems by providing a brake caliper and an actuator which are arranged to permit the actuator to be positioned in a plurality of positions, suitable for use in a variety of different axle applications. It is a further object to provide an actuator which only requires caliper production fixtures and tooling set-up for one caliper configuration, preferably with an actuator mounting surface corresponding to a zero degree offset, with the actuator being arranged to be mounted on the single caliper design in one of at least two offset angle positions.

The object is achieved by providing the caliper with a standardized actuator-receiving mounting flange orientation (for example, a flange which is parallel to the brake disc (*i.e.*, perpendicular to the vehicle axle axis), and providing different brake actuators with mating surfaces with an appropriate configurations to mate with the standard caliper mounting surface to achieve the desired final caliper-actuator orientation. This approach greatly lowers costs, both by eliminating the need for multiple caliper machining operations and fixtures, and by eliminating the need to maintain inventories of multiple caliper designs. Moreover, these advantages may be obtained without any corresponding increase in brake actuator machining cost, as machining of the actuator mounting flange may still be completed in one stage, regardless of the angle at which the flange is machined.

It is a further object to provide a standardized caliper-to-actuator arrangement in which proper brake operation is maintained by maintaining a desired kinematic relationship between the actuator input force to the caliper's actuating lever, and thus the mechanical advantage of the caliper lever (*e.g.*, a 15.6:1 ratio). This is achieved by offsetting the actuator mounting bolts in a preferred relationship between the offset and the length of the actuator piston rod, and, if necessary, providing a slight conical shape to the actuator piston plate to allow full movement of the actuator through its full stroke.

The objects of the invention are achieved by the subject matter of claims 1 and 9. Preferred embodiments are the subject matter of the subclaims.

Other objects, advantages and novel features of the present invention will become apparent from the following detailed description of the invention when considered in conjunction with the accompanying drawings.

## BRIEF DESCRIPTION OF THE DRAWINGS

Figure 1 is a cross-sectional side view of a prior art caliper and actuator showing caliper surfaces which must be machined at multiple angles in order to locate a brake actuator at an angle relative to a vehicle axle.

Figure 2 is a side view of a caliper and actuator in accordance with an embodiment of the present invention in which the actuator is adapted to mate with a standardized caliper having an actuator mounting flange perpendicular to a vehicle axle.

Figures 3a and 3b show a cross-section view and a mounting-flange-end view, respectively, of a brake actuator caliper with offset mounting studs in accordance with a further embodiment of the present invention.

## DETAILED DESCRIPTION OF THE DRAWINGS

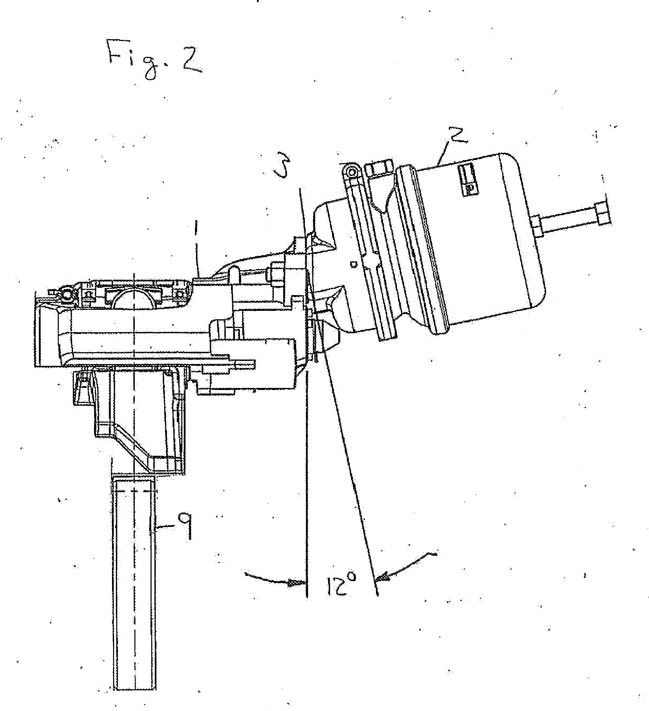

In the embodiment shown Fig. 2, the reference label numbers correspond to those of Fig. 1 where comparable elements are illustrated.

Fig. 2 thus shows a brake caliper 1 located over a brake rotor 9, which in turn is located on a vehicle axle (not illustrated). The brake caliper 1 is mated to a pneumatic actuator 2 at a mounting flange joint 3. Unlike the prior art caliper of Fig. 1, the brake caliper in the present embodiment has an actuator mounting flange surface which is machined perpendicular to the vehicle axle axis (*i.e.*, perpendicular to a direction of movement of the brake pads toward the brake rotor when the brake is applied). Such a caliper may be referred to as a "zero degree" caliper, reflecting the lack of angular displacement of the mounting flange surface on the caliper side of the caliper-actuator joint. In order to angle the pneumatic actuator 2 upward at a 12° angle to allow greater clearance relative to the vehicle axle, the pneumatic actuator mounting flange surface, which meets the caliper actuator mounting flange surface at flange joint 3, is machined at the 12° angle. The present invention is not limited to a specific acute angle greater than 0°, for example, an actuator mounting surface angle of 5°, or an angle greater than 12°, may be provided on the actuator.

The arrangement of this embodiment permits caliper 1 to be machined without the need for repositioning of the caliper during production solely for the purpose of forming an angled actuator mounting flange, and without requiring extra machining steps on actuator 2 as the actuator's mounting surface requires a machining step, whether perpendicular to a longitudinal axis of the actuator or set at an angle. This arrangement not only provides manufacturing benefits (*e.g.*, lower production and tooling costs), it also lowers distribution and inventory management costs by permitting a single brake caliper within a caliper model line having an actuator mounting flange surface a 0° (*i.e.*, perpendicular to the vehicle axle) to be used in multiple vehicle applications with actuators having various mounting flange angles. In view of the expense and amount of machining required on complex brake calipers, particularly the large, heavy calipers used on commercial vehicle applications, the logistical savings achieved by standardizing the caliper in a brake model line significantly outweigh any additional costs which may be associated with distributing additional versions of relatively simple and less costly pneumatic actuators having mounting surfaces machined at different angles.

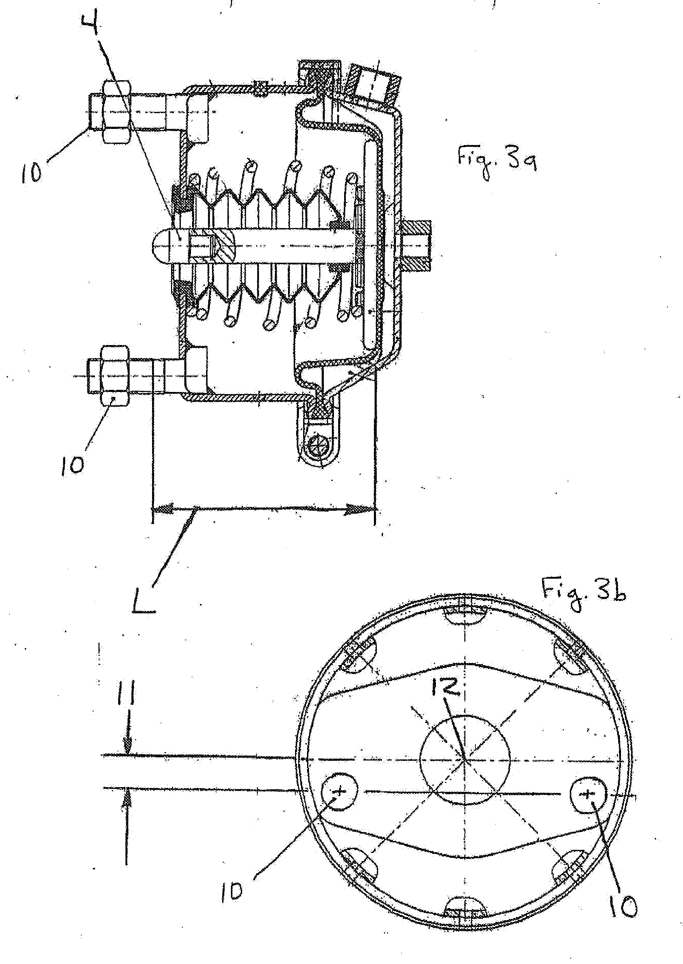

Figs. 3a and 3b illustrate a further feature of the present invention, in which a desired kinematic relationship between the actuator's actuating rod and the caliper's actuating lever is maintained in order to ensure proper brake operation. In the Fig. 3 embodiment, the mounting studs 10 are shown displaced by a distance 11 from a center of the actuator 12. This offset is sufficient to compensate for the change in mechanical advantage that would otherwise occur due to the angular displacement of the actuator relative to the caliper. The amount of the offset distance 11 was determined by the following relationship:

$$\text{Offset distance} = \sin\left((\alpha_0 + \alpha_1)/2\right) \times L \quad (1)$$

where $\alpha_0$ is the angle between caliper and the actuator in an initial orientation from which the actuator is to be displaced (0° in this embodiment), $\alpha_1$ is the angle between the caliper and the actuator in the desired orientation (12° in this embodiment), and L is the length of the actuator pushrod 4. The mounting stud offset resulting from the equation (1) calculation maintains the geometric relationship of the actuator pushrod rod 4 relative to the caliper's brake actuator lever 5, when in its zero stroke position, and thus maintains the original caliper-to-actuator mechanical advantage ratio.

The foregoing disclosure has been set forth merely to illustrate the invention and is not intended to be limiting. For example, a zero degree caliper may be mated to a zero degree actuator (i.e., an actuator with a mounting flange surface machined perpendicular to the actuator's longitudinal axis), via an intermediate wedge-shaped adapter which provides the desired angular offset of the actuator while still using a zero degree caliper. Because other such modifications of the disclosed embodiments incorporating the spirit and substance of the invention may occur to persons skilled in the art, the invention should be construed to include everything within the scope of the appended claims and equivalents thereof.

**Claims**

1. A disc brake for a vehicle, comprising:

   a brake rotor;
   a caliper arranged to straddle the brake rotor and to apply a braking force to a friction surface portion of the rotor when a brake application mechanism of the caliper is actuated; and
   a pneumatic or electric actuator arranged to actuate the brake application mechanism to apply the braking force,

   wherein
   an actuator mounting flange surface of the brake caliper is formed perpendicular to a direction of movement of the brake pads toward the brake rotor; and
   a mounting surface of the pneumatic or electric actuator which mates to the brake caliper actuator mounting flange surface is formed at an angle which positions the actuator at a predetermined acute angle relative to the brake caliper when the pneumatic or electric actuator is mounted to the brake caliper.

2. The disc brake of claim 1, wherein actuator mounting flange surface of the brake caliper is formed by machining.

3. The disc brake of claim 2, wherein actuator mounting flange surface of the brake caliper is machined without repositioning of the caliper in a machining fixture during machining of other caliper surfaces.

4. The disk brake of claim 1, wherein the pneumatic or electric actuator mounting surface is machined at an angle between 3° and 20°.

5. The disk brake of claim 4, wherein the pneumatic or electric actuator mounting surface is machined at an angle of approximately 5°.

6. The disk brake of claim 4, wherein the pneumatic or electric actuator mounting surface is machined at an angle of approximately 12°.

7. The disk brake of claim 1, wherein mounting fastener for mounting the actuator to the caliper are laterally offset from a centerline of the actuator.

8. The disk brake of claim 7, wherein lateral offset is equal to the sine of the average of a first angle corresponding to an initial orientation of the actuator relative to the caliper and a second angle corresponding to a desired orientation of the actuator to the caliper, multiplied by the length of the actuator's brake actuating pushrod.

9. A vehicle axle assembly, comprising:

   a vehicle axle; and
   a disc brake disposed at a hub end of the vehicle axle, the disc brake including:
   a brake rotor;
   a caliper arranged to straddle the brake rotor and to apply a braking force to a friction surface portion of the rotor when a brake application mechanism of the caliper is actuated; and

a pneumatic or electric actuator arranged to actuate the brake application mechanism to apply the braking force,

wherein

an actuator mounting flange surface of the brake caliper is formed perpendicular to a direction of movement of the brake pads toward the brake rotor; and

a mounting surface of the pneumatic or electric actuator which mates to the brake caliper actuator mounting flange surface is formed at an angle which positions the actuator at a predetermined acute angle relative to the brake caliper when the pneumatic or electric actuator is mounted to the brake caliper.

10. The vehicle axle assembly of claim 9, wherein actuator mounting flange surface of the brake caliper is formed by machining.

11. The vehicle axle assembly of claim 10 wherein actuator mounting flange surface of the brake caliper is machined without repositioning of the caliper in a machining fixture during machining of other caliper surfaces.

12. The vehicle axle assembly of claim 9, wherein the pneumatic or electric actuator mounting surface is machined at an angle between 3° and 20°.

13. The vehicle axle assembly of claim 12, wherein the pneumatic or electric actuator mounting surface is machined at an angle of approximately 5°.

14. The vehicle axle assembly of claim 12, wherein the pneumatic or electric actuator mounting surface is machined at an angle of approximately 12°.

15. The vehicle axle assembly of claim 9, wherein mounting fastener for mounting the actuator to the caliper are laterally offset from a centerline of the actuator.

16. The vehicle axle assembly of claim 15, wherein lateral offset is equal to the sine of the average of a first angle corresponding to an initial orientation of the actuator relative to the caliper and a second angle corresponding to a desired orientation of the actuator to the caliper, multiplied by the length of the actuator's brake actuating pushrod.

Fig. 2

Fig. 3a

Fig. 3b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4032886 A1